# EUROPEAN PATENT SPECIFICATION

(11) **EP 4 000 916 B1**
(45) Date of publication and mention of the grant of the patent: **31.12.2025**
(21) Application number: 20207553.7
(22) Date of filing: 13.11.2020
(51) Int. Cl.: B32B 5/02, B32B 5/08, B32B 5/24, B32B 7/12, B32B 27/08, B32B 27/12, B32B 27/30, E04F 15/10

(54) **FLOOR COVERING AND METHOD FOR MANUFACTURING THEREOF**
BODENBELAG UND VERFAHREN ZUR HERSTELLUNG DAVON
REVÊTEMENT DE SOL ET PROCÉDÉ DE FABRICATION DE CECI

(43) Date of publication of application: 25.05.2022
(73) Proprietor: Unilin, BV, 8710 Wielsbeke (BE)
(72) Inventor: DUBOIS, Jean, 8580 Avelgem (BE); SYBOUT, David, 8580 Avelgem (BE)
(74) Representative: Unilin Technologies

(56) References cited:
- EP-A1- 2 236 286
- EP-A1- 3 348 420
- EP-B1- 2 236 286
- EP-B1- 3 348 420
- WO-A2-2016/134243
- JP-A- H03 167 360
- US-A1- 2019 263 307

## Description

This invention relates to a floor covering and a method of manufacturing a floor covering.

In particular, however, not restrictive, the invention aims at floor covering products that can more easily be recycled.

More particularly, the invention relates to a floor covering material of the so-called "cushion vinyl" type. Such floor covering material is widely known, for example, from EP 1 507 920, EP 1 360 366 and EP 3 348 420. Herein, this may relate to a web-shaped floor covering material which is supplied from a roll. Then, in a room a plurality of webs cut to length can be installed next to each other, for example, by gluing the respective webs at their edges onto the subfloor or onto the underlying floor. Floor covering material of the "cushion vinyl" type can be composed starting with a backing or a carrier (In English, also called a "liner"), on which a foamed layer is situated, namely, the actual cushion vinyl layer. This foamed layer as such can consist of one or more sublayers. On the foamed layer then a printed decor is situated. The printed decor either can be applied as a foil printed beforehand, for example, a printed PVC foil, or can be formed directly on the foamed layer, for example, with the intermediary of suitable primers and other basic layers, such as layers on the basis of PVC plastisol. On the upper side, the printed decor is protected by a transparent wear layer, which also can be based on PVC (Polyvinyl chloride). Possibly, a superficial lacquer based on acrylate, urethane acrylate or polyurethane can be present on the surface of the wear layer.

Typically, the cushion vinyl is made by applying several PVC based layers on a carrier, each layer with its own function: impregnation, surface foaming, printing, wear protection and carrier. Currently wet laid non-woven glass fleeces are used as carrier in the cushioned vinyl process. They fulfil the requirements to obtain a stable process and a dimensionally stable end product.

EP 1 507 920 relates to a floor covering, preferably a cushion vinyl, comprising a base support and the visible face consisting of a surface covering conferring the decoration and the wear resistance of the floor covering and the reverse side intended to be in contact with the ground which is constituted by a textile sheet of polyester, polyamide or polypropylene fibers. In the teachings of EP '920 said textile is a non-woven textile glued to the bottom of said flooring using a plastisol coating, and said gluing is done discontinuously between said reverse side and said textile structure ensuring their adhesion with limited penetration into the thickness of the textile web. In this particular case, the textile is glued to the bottom of the flooring in an oven. The textile in such floor coverings is relatively bulky and complicates the recycling process of such floor coverings. A simple shredding and reworking of the obtained material is cumbersome due to a too high amount of the backing material available in the obtained scrap.

EP 1 360 366 discloses a floor covering produced by coating, which comprises a base structure made of a thermoplastic, especially a plasticized PVC, reinforced by a textile reinforcement and optionally combined with a foam underlayer, and the visible side of which consists of a surface coating giving the decoration and the wear resistance of the article, characterized in that the reverse side intended to be in contact with the floor consists of a textile web, the textile structure being tied to the reverse side of the base support via an additional layer of plastisol, which penetrates over a small proportion of the thickness of the textile structure and which, after gelling, ensures that this textile is bonded to the reverse side of the thermoplastic base support. In this particular case, a non-woven textile is discontinuously glued to the bottom of the cushion vinyl, and the gluing is performed by, for example a hotmelt or similar. This floor covering material leads to the same problems in recycling as explained above in relation to EP'920.

The present invention aims in the first place at an alternative floor covering, wherein, in accordance with several preferred embodiments, solutions are offered to the problems with the floor coverings of the prior art. In particular a floor covering is aimed at, whereby the production, installation and/or removal of said floor covering is realized in a particularly smooth manner. Furthermore, the present invention seeks to obtain a floor covering with an excellent walking comfort, sound dampening characteristics and of an exceptional flatness. Preferably, the floor covering of the invention is less cumbersome to recycle.

To this aim, the invention, according to a first aspect, pertains to a floor covering according to claim 1. The term "melting temperature", as used herein, means the temperature at which the fiber becomes soft and/or liquid. Once that the fibers are melt, the backing textile layer could be reprocessed. A backing textile that is at least partially made from fibers having a relatively low melting temperature, provides a more easy reworking of a shredded floor covering by melting and/or extrusion, while maintaining the desired walking comfort, sound dampening characteristics and flatness. The portion of the textile backing that is made from these low melting fibers has a high potential of being molten at the temperature where the bulk of the shred floor covering material is melting as well, or will be easy to separate from the scrap, or from the floor covering before shredding, e.g. by heating.

In a particularly preferred embodiment according to the first aspect of the invention, the backing textile comprises polyvinyl chloride. It was found to be particularly advantageous to use polyvinyl chloride fibers, as such fiber typically has a melting temperature of at least 105 °C, preferably of at least 110 °C, more preferably of at least 115 °C, most preferably of at least 120 °C and at most 155°C, preferably of at most 150 °C, more preferably of at most 145 °C, most preferably of at most 140 °C. The textile backing comprising polyvinyl chloride (PVC) fibers can be easily collected and reprocessed, while PVC felt was found particularly advantageous for floors of advantageous walking comfort, sound dampening characteristics and flatness.

The floor covering according to the invention is preferably characterized in that the reverse side intended to be in contact with the ground consists of said textile backing. preferably of the non-woven type, the connection between the textile structure and the side of the base layer, preferably thermoplastic base layer is achieved through contact with the textile backing and which secures this textile to the back of the base support made of thermoplastic material. In a preferred embodiment, said contact of the base layer and the textile backing is achieved by gluing means, preferably by a suitable gluing compound which is applied in order to penetrate over a minority part of the thickness of the backing textile, for example over at least 5 percent of the thickness, and preferably less than 50 percent of the thickness. Preferably, the bottom half of the textile backing is free from glue or gluing compound, and preferably free from materials other than the fibers making up the textile, such that the flatness and comfort attributed to the floor covering by the textile backing can be maximized.

In a preferred embodiment according to the first aspect, said backing textile comprises a fiber, preferably a polyvinyl chloride PVC fiber, of a melting temperature of at least 105 °C, preferably of at least 110 °C, more preferably of at least 115 °C, most preferably of at least 120 °C and at most 155°C, preferably of at most 150 °C, more preferably of at most 145 °C, most preferably of at most 140 °C.

The floor covering according to the first aspect of the present invention is surprisingly easy to produce and easy to remove. Moreover, as already mentioned above, the constituting layers may be easily recyclable either in separated form or together, as a whole floor covering. The floor covering according to the first aspect may be produced in an efficient and low-cost manner, using relatively available and affordable constituents, for example using polyvinyl chloride compositions for the fibers of said textile backing and for the main material of said base layer. Further, the floor covering according to the first aspect of the invention can be collected and recycled as the composition thereof features a minimized risk of residual loading onto the production equipment. Because of minimal loading and loss of the material during the recycling, the constituents of the floor covering of the invention could be reused in an exceptionally high quantity. Thus, the floor covering according to the first aspect of the present invention may represent a more green and environmentally friendly alternative to similar floor coverings known in the prior art.

In a preferred embodiment according to the first aspect, the floor covering is characterized by a melting temperature of said backing textile being at least 105 °C and at most 155 °C. The term "a melting temperature of said backing textile" means the temperature at which the whole backing textile layer melts, becomes liquid or soft so that said melt textile can be easier processed. By processing of textile felt here is meant, for example, embossing, laminating, installing, gluing, collecting, reprocessing, recycling and the like. In a preferred embodiment all the fibrous constituents of the backing textile become soft and liquid at said melting temperature. In a particularly preferred embodiment according to the first aspect of the present invention, the backing textile melts at the temperature falling within the range of at least 105 °C, preferably of at least 110 °C, more preferably of at least 115 °C, most preferably of at least 120 °C and at most 155°C, preferably of at most 150 °C, more preferably of at most 145 °C, most preferably of at most 140 °C. Using of a backing textile of said melting temperature was found to be particularly advantageous for enabling of a smooth and efficient removal of said backing textile from the floor base layer. The softened textile backing is easily removed using a suitable mechanical means without any significant residual loss remaining on said floor covering. The removed textile backing can easily be recycled. Furthermore, said removed backing textile has a low risk of loading onto the processing equipment, which makes both the production and removal processes more economic and requires less maintenance of the equipment. For most choices of the material of the base layer, the floor covering, including the textile backing of the present preferred embodiment, may be shred and molten as a whole, i.e. without prior separation of the textile backing. Seeing the melting temperature of the textile backing such method has a low risk of causing material incompatibility or equipment problems.

In another preferred embodiment, the floor covering according to the first aspect of the invention has the base layer of a melting temperature of at least 105 °C and preferably at most 155 °C. In a further preferred embodiment, said melting temperature of the base layer is in the range from at least 105 °C, preferably of at least 110 °C, more preferably of at least 115 °C, most preferably of at least 120 °C and at most 155°C, preferably of at most 150 °C, more preferably of at most 145 °C, most preferably of at most 140 °C. In the particularly preferred embodiment, the melting temperature of said base layer is in the same range as the melting temperature of the fibers of the textile backing. This embodiment is particularly advantageous for easy collecting of the whole floor covering and easy recycling of both the textile backing and the base layer. This is preferably done by heating the floor covering according to the first aspect of the invention to the temperature of at least 90 °C, even more preferably to the temperature of at least 105 °C, most preferably to at least 120 °C, followed by collecting of softened layers using a suitable technical means.

In a particularly preferred embodiment, the floor covering comprises a top layer, a base layer and a textile backing which could be melted and reprocessed together. In a particularly preferred embodiment said top layer, base layer and textile backing are predominantly made of PVC.

In an alternative embodiment, the base layer is of a melting point higher than 155 °C. In said alternative embodiment after subjecting the floor covering to the temperature of at least 90 °C, preferably of at least 105 °C, most preferably of at least 120 °C, only the backing textile is softened. Said softened backing textile is preferably cut into pieces and removed from the base layer by a suitable mechanical means.

In a further preferred embodiment, in the floor covering according to the first aspect of the invention, the base layer comprises a glass fiber in a content of at most 3 wt.%, preferably at most 2 wt.%, most preferably at most 1 wt.%, calculated on a basis of said base layer. The glass fiber is typically forming a carrier, and allows for improved mechanical properties and better flatness of the floor covering of the invention. Glass fiber is of the melting temperature higher than 155 °C, and glass fiber can typically load onto the processing equipment. The floor covering of the present invention comprises a glass fiber in a relatively low content, so the content of residual material which would remain solid upon application of temperatures suitable for melting the textile backing and preferably the base layer and/or top layer would remain low.

According an alternative embodiment, a small quantity of constituents such as polyester or polyamide fiber could be present in the floor covering as long as the quantity does not lead to serious obstacles in recycling process. At the same time, the floor covering is composed of versatile constituents which allow for the better adhesion, exceptional flatness and the dimensional stability of said floor covering.

In another preferred embodiment, the base layer of the present invention comprises an inorganic filler material in a content of at most 50 wt.%, preferably at most 30 wt.%, most preferably at most 20 wt.%, calculated on a basis of said base layer. Said inorganic filler material is preferably chosen from a group consisting of chalk, talc, sand and magnesium oxide. Said inorganic filler material contributes to improved mechanical properties, better flatness and sound dampening characteristics of the floor covering of the invention.

In a further preferred embodiment, the backing textile of the floor covering is a non-woven textile. Said non-woven textile was found to lead to an exceptional walking comfort and sound dampening of the floor covering according to the first aspect of the invention. Moreover, said non-woven textile levels down the imperfections in the subfloor and prevents telegraphing of the floor covering. In a preferred embodiment, the low-density felt is used as the backing textile, as the three dimensional distribution of fiber allows for a good dimensional stability and better fiber adhesion to the base layer of the floor covering. Preferably, hollow spaces are available between the felt fibers. Such hollow spaces between the felt fibers allow better penetration of the base layer particles and better adhesion of base layer to the backing textile.

Preferably, the textile backing is substantially free of glass fibers and other high density material. Thus, said backing textile maintains relatively light weight and easy installation properties.

As already mentioned, in a preferred embodiment, the textile backing comprises hollow structures or spaces, for example the textile backing may be a non-woven felt comprising hollow spaces. With such textile backing easier gluing is obtained. In a preferred embodiment suitable gluing means used to achieve the adhesion of the base layer to the backing textile is a gluing compound. In a further preferred embodiment, said gluing compound is applied discontinuously. In another embodiment, said gluing compound is applied continuously.

In alternative embodiment, said gluing of the base layer and the backing textile is achieved by a lamination, heat treatment, irradiation, or the like method.

In a particularly preferred embodiment, said backing textile is a needle felt type. Said needle felt type is particularly advantageous for sound-dampening and walking comfort. Needle felt may comprise hollow or void spaces where the needles have penetrated the fiber mass. These void spaces allow for excellent adhering properties of said backing textile to the base layer. Said adhering properties are preferably achieved by application of a gluing means, more preferably a glue composition. In a preferred embodiment, said glue would penetrate into the hollow spaces within the needle felt and allow for a good and a long-lasting adhesion with minimal consumption of said gluing compound.

In alternative embodiment, other types of non-woven textiles are used as a textile backing of the floor covering according to the first aspect of the invention. Some non-limiting examples of said other types of non-woven textile are thermally bond, chemically bond, spunlace, spunbond, point-bonded, meltblown, hot-rolled, hot press, adhesive bond, melt-blown, air and wet-lay melt as well as a non-woven felt obtainable either by electrospinning or mechanical reinforcement processes. It should be understood by a skilled person that other type of non-woven felt material could be used in the backing textile without departing from the scope of the present invention.

Alternatively, the gluing of the base layer and the backing textile can be done by lamination of the base layer and the textile backing laid beneath, and preferably directly beneath said base layer. Preferably, the adhesion by lamination takes place at temperatures below 120 °C, preferably below 105 °C, even more preferably below 90 °C. Lamination at these temperatures requires a more moderate amount of energy compared to the techniques of the prior art.

In a preferred embodiment, the backing felt thickness is at least 0.3 mm, preferably at least 0.4 mm, most preferably at least 0.5 mm , and at most 3.0 mm, preferably at most 2.0 mm, most preferably at most 1.1 mm. Said thickness was found to be particularly advantageous, as it provides an improved flatness and sound dampening characteristics of said floor covering. Said relatively thick layer of textile, preferably non-woven textile, levels the imperfections of subfloor and provides for more natural look and feel of the floor covering according to the first aspect of the invention. Since the backing textile in accordance with the invention is at least partially made from low melting fibers, the ratio between the thickness of the textile backing and the entire thickness of the floor covering may be relatively high without having a material impact on recyclability. Preferably, said ratio is at least 10% and may amount up to 45%.

In another preferred embodiment, the floor covering according to the first aspect of the invention comprises backing textile of a grammage of at least 50 g/m³, preferably of at least 80 g/m3, and of at most 200 g/m³, preferably of at most 120 g/m³.

In a preferred embodiment the floor covering according to the first aspect of the invention is of a thickness of at least 0.9 mm and at most 5 mm. Said flooring provides surprisingly an improved walking comfort, acoustic and better thermal insulation.

In another preferred embodiment, the floor covering according to the first aspect of the invention, comprises a backing textile comprising a fiber wherein said fiber is chosen from a group consisting of polyvinyl chloride, polyethylene, polypropylene, polybutene-1, a copolymer of polyester. In the case of a copolymer of polyester, a glycol modification of PET (Polyethylene terephthalate) may be opted for, e.g. through copolymerization with 2-methyl-1,3-propanediol.

According to the claimed invention, said backing textile comprises at least 80 wt.% of PVC, preferably at least 90 wt.% of PVC, most preferably 95 wt.% of PVC.

The backing textile according to the preferred embodiment of a floor covering according to the first aspect of the invention allows for an easy recycling and minimal loading of the non-recycled material onto the equipment. Another advantage is that the said PVC based backing textile is of a relatively low melting temperature. This allows for relatively easy removal of said backing textile at a temperature as low as 90 °C, which makes the removal process very efficient and low cost when compared to similar processes in the prior art. The PVC backing textile is of a relatively low melting temperature, meaning it may melt fully at a temperature necessary for melting the base layer of such floor covering. Such low melting temperature is particularly advantageous for enabling efficient recycling of the whole floor covering. Moreover, the PVC is very compatible with techniques for obtaining non-woven textile felt and the PVC felt is low cost and durable.

In another preferred embodiment, the textile backing further comprises a polyolefin chosen from a group consisting of polyethylene, polypropylene and polybutene-1.

In another embodiment, the textile backing is predominantly made of polyolefin chosen from a group consisting of polyethylene (PE), polypropylene (PP) and polybutene-1. In a further preferred embodiment, said backing textile comprises at least 80 wt.% of polyolefin, preferably at least 90 wt.% of polyolefin, most preferably 95 wt.% of polyolefin.

In another embodiment, said textile backing comprises at least two types of fiber. Blending of the fibers in the textile backing may lead to an advantageous chemical versatility, better adhering to the base layer, better compatibility with gluing techniques and lowering the melting temperature. In an alternative embodiment, the composition of the backing textile is such that it allows the adherence to the base material without application of the gluing compound. In an alternative embodiment, the textile backing comprises PVC, and at least one polyolefin chosen from the group consisting of PE, PP and polybutene-1.

In another alternative embodiment, the backing textile comprises polyvinyl butyral (PVB). In another embodiment, PVB is comprised within a textile backing together with at least another polymer fiber, so that the melting temperature of the textile felt is at least 105 °C and at most 155 °C, preferably at least 120 °C and at most 140 °C. In one alternative embodiment, the textile backing comprises at least PVC and PVB fibers. In another alternative embodiment, the textile backing comprises at least PVC, PVB and at least one polyolefin chosen from the group consisting of PE, PP and polybutene-1.

In an alternative embodiment, the textile backing felt comprises additional non-PVC non-polyolefin type of fibers. It should be understood by a skilled person that other fibers such as polyester, copolymers thereof, polyamide, and the like can be constituents of said textile backing as long as a melting temperature of said backing textile layer is at least 105 °C and at most 155 °C, preferably from about 120 °C to about 140 °C.

In one embodiment, the individual fibers of the textile backing felt have a diameter in the range of 3 µm to 18 µm, more preferably in the range of 4 µm to 13 µm, most preferably in the range of 5 µm to 7 µm.

In alternative embodiment, the backing textile additionally comprises a binder to improve handling of said backing textile and/or to improve the dimensional stability and processability. Preferably, the binder comprises any thermoplastic or thermoset organic polymers, copolymers or any mixture thereof, such as polyvinyl alcohol PVA, acrylate, styrene butadiene, ethylene, vinyl acetate, styrene acrylates, polyvinyl acrylate, or PVC plastisol.

Within the scope of the present invention it is understood that the term fibers refers to both staple fibers and filaments. Staple fibers are fibers which have a specified, relatively short length in the range of 2 to 200 mm. Filaments are fibers having a length of more than 200 mm, preferably more than 500 mm, more preferably more than 1000 mm. Filaments may even be virtually endless, for example when formed by continuous extrusion and spinning of a filament through a spinning hole in a spinneret.

In another embodiment, the backing textile comprises the fibers which may have any cross sectional shape, including round, trilobal, multilobal or rectangular, the latter exhibiting a width and a height wherein the width may be considerably larger than the height, i.e. having a width to height ratio of at least 2, preferably at least 5, more preferably at least 10, most preferably at least 25, so that the fiber in this embodiment is a tape. Furthermore, said fibers may be mono-component, bicomponent or even multicomponent fibers without departing from the scope of the invention.

In an alternative embodiment, the fibers of the textile backing have a linear density in the range of 1 to 25 dtex, preferably in the range of 2 to 20 dtex, more preferably in the range of 5 to 15 dtex, most preferably in the range of 5 to 10 dtex to provide processing stability and mass regularity to the textile material while maintaining sufficient structure openness for even penetration and/or adhesion of the base layer thermoplast onto the textile backing. In a preferred embodiment, said linear density allows for better adhesion of the foamed PVC plastisol of the base layer onto the backing textile. The unit dtex defines the fineness of the fibers as their weight in grams per 10000 meter.

The non-woven layer of fibers comprised in the textile backing may be any type of non-woven, such as for example staple fiber non-wovens produced by well-known processes, such as for example carding processes, wet-laid processes or air-laid processes or any combination thereof. The non-woven layer of fibers may also be a non-woven composed of filaments produced by well-known spunbonding processes wherein filaments are extruded from a spinneret and subsequently laid down on a conveyor belt as a web of filaments and subsequently bonding the web to form a non-woven layer of fibers, or by a two-step process wherein filaments are spun and wound on bobbins, preferably in the form of multifilament yarns, followed by the step of unwinding the yarns and/or multifilament yarns from the bobbins, optionally opening the multifilament yarns into essentially individual filaments and/or filaments groups comprising 2 to 50 filaments, preferably 2 to 25 filaments, more preferably 2 to 10 filaments, and laying the filaments and/or filament groups down on a moving conveyor belt as a web of filaments and bonding the web to form a non-woven layer of fibers.

The floor covering according to the first aspect of the invention comprises at least a vinyl foamed layer as a base layer, e.g. wherein said floor covering is a cushioned vinyl. In a further preferred embodiment said base layer is foamed at elevated temperature allowing to acquire the cushioned vinyl floor covering.

In a preferred embodiment, said floor covering is a cushion vinyl which is made by applying several PVC layers preferably directly on the backing textile. Some of the non-limiting examples of the function of said layers are impregnation, surface foaming, printing, wear protection and the like.

According to the most preferred embodiment, preferably at least the foamed layer and/or the possible transparent wear layer comprises PVC and/or fillers, such as chalk, or the foamed layer and/or the transparent wear layer substantially consists of PVC and/or fillers, such as chalk.

In a preferred embodiment according to the first aspect of the invention, the floor covering comprises at least:
- a top layer, preferably comprising a PVC based decor layer, optionally a PVC based wear layer above, and preferably directly above said décor layer, and the lacquer layer above, and preferably directly above said wear layer;
- a base layer made of a thermoplastic material, such as PVC with or without fillers;
- a backing textile layer made of PVC fibers.

In the further preferred embodiment, said floor covering comprises a PVC based wear layer within said top layer. In an alternative embodiment, said wear layer further comprises corundum.

In the further preferred embodiment, said base layer is foamed PVC thermoplastic material.

In a further preferred embodiment said base layer further comprises at least a carrier layer, wherein said carrier is made of glass fiber or textile scrim.

In a further preferred embodiment, said base layer further comprises a filler. In a further preferred embodiment said filled is chosen from: chalk, talc, sand or magnesium oxide.

In a preferred embodiment said top layer comprises the lacquer layer, wherein said lacquer layer is a polyurethane based lacquer.

It is clear the invention primarily relates to a PVC based floor material, although it is not excluded that the invention also relates to a linoleum-, polyurethane- or acrylate-based floor covering.

According to an alternative embodiment, at least the foamed layer comprises an acrylate, and/or fillers, such as chalk, wherein the foamed layer preferably is at least partially obtained from a foamable plastisol of acrylate, or the foamed layer substantially consists of such acrylate and/or fillers, such as chalk.

Although the invention in the first place relates to wall-to-wall floor covering products, more particularly vinyl which is marketed on rolls, it may also be applied for the production of floor panels.

In an alternative embodiment, the present invention relates to synthetic material-based floor panel which can be provided as a floor covering on a supporting underlying floor. Such floor panels are known as vinyl tiles, also called LVT (Luxurious Vinyl Tiles), as up to now they mostly are realized on the basis of vinyl. The present invention is also applicable to tiles, more particularly floor panels of which at least the substrate is realized on the basis of other synthetic materials, for example, polypropylene (PP), polyethylene (PET) or polyurethane (PUR). Preferably, this relates to semi-rigid or soft synthetic materials, which to this aim may be provided, for example, with plasticizers.

In the alternative embodiment, the floor covering according to the first aspect of the present invention comprises of at least one floor panel, said panel being made of substrate showing one or more of the following characteristics:
- preferably the material of the substrate contains a supple thermoplastic, more particularly a thermoplastic which is provided with a plasticizer;
- preferably, the material of the substrate is based on polyvinyl chloride (PVC);
- preferably, the material of the substrate contains one or more filler materials, for example, chalk;
- preferably, the material of the substrate, either across the entire thickness thereof, or across only a portion of the thickness thereof, substantially consists of a composite of synthetic material and particles, and more particularly WPC (Waterproof Plastic Composite) or SPC (Solid Plastic Composite), wherein for the synthetic material preferably use is made of polyvinyl chloride;
- preferably, the substrate contains a reinforcement layer, such as a glass fiber fleece or the like;
- a textile backing layer, in accordance with the first aspect, beneath, and preferably directly beneath said substrate.

Furthermore, in said alternative embodiment, said floor panel comprises a top layer comprising a PVC film, wherein it preferably relates to a hard PVC film, namely, a film on the basis of PVC without plasticizer or with an amount of plasticizer of less than 5 percent by weight.

In a preferred embodiment, according to the first aspect of the invention floor coverings of a very small thickness as well as of a larger thickness, and thus more difficult to bend, can be realized. Practical values of thicknesses are 0.9 to 5 mm.

According to one possibility, the floor covering according to the first aspect of the invention comprises panels, which are provided with coupling parts at their edges, whereby a plurality of such panels can be coupled to each other at their edges in a mechanical manner in order to thereby provide for a locking preferably horizontally as well as vertically.

According to another possibility, the floor panels are formed such that they are free from coupling parts at their edges, wherein the floor panels are of the type which is intended for being installed according to the "loose lay" principle, or for being installed by means of gluing to the underlying surface.

In another preferred embodiment, the floor covering according to the first aspect of the invention, has a top layer, wherein said top layer comprises at least a décor print layer, a wear layer above and preferably directly above said décor print layer and optionally a lacquer layer above and preferably directly above said wear layer.

In a further preferred embodiment, the floor covering according to the first aspect of the invention comprises a top layer predominantly made of polyvinyl chloride.

Said top layer is preferably laminated on the base layer and may consist of any suitable synthetic material, however, according to the claimed invention a PVC film is applied. Other examples, not according to the claimed invention, are PU, PP and PET films. In the case of a PP film, this may relate, for example, to an oriented polypropylene film. In the case of a PVC film, this preferably relates to a hard PVC film, namely, a film on the basis of PVC without plasticizer or with an amount of plasticizer of less than 5 percent by weight. Such hard PVC film can be printed with a higher precision, certainly in the case of a print performed with water-based inks. In such case, a drying operation by means of heat supply is desirable in the printing process, however, by choosing hard PVC the possible expansion of the film is restricted. The wear layer preferably also comprises a thermoplastic material, such as soft or hard PVC, PU, PP or PET. Preferably, the transparent thermoplastic wear layer is free from solid additives, such as ceramic particles for promoting wear resistance, although this kind of particles is not excluded. However, the inventor has found that they may be omitted in view of obtaining a good transparency, whereas still an acceptable wear resistance is kept.

In a preferred embodiment, a décor print layer is a decor film and more particularly a film which is provided with a print. Such print can be realized beforehand at a printer's. However, according to a preferred alternative of the invention, the film forming the decor layer is printed directly, thus, during the manufacturing process, however, prior to laminating, preferably by means of a digital printer or printing unit. It is also not excluded to realize the print after laminating, or partially before and partially after, however, preferably before possible impressions for forming a relief are provided in the surface.

According to an alternative, it is not excluded that the printed decor or the print may be provided on the underside of the wear layer, wherein then no separate film will be necessary for applying the decor. If indeed specifically a film is applied for the decor, the print can be provided either on the upper side only, or on the lower side only, or both on the upper side and the lower side.

Herein, the possibly provided decor may form a representation of a wood motif or stone motif, or any other motif, such as a fancy pattern.

In the most preferred embodiment, said floor covering is web shaped, wherein the printed decor preferably forms a representation of a parquet floor, wherein, for example, floor panels are depicted in adjacent rows. Preferably, the aforementioned rows extend in the longitudinal direction of said web-shaped floor covering material. It is clear that different print patterns may be provided onto the floor covering according to the first aspect, without departure from the scope of the invention.

On the surface of the floor covering, for example, said vinyl cushion, a structure may be provided, formed by impressions, such as a wood or stone structure, respectively. Other impressions may be applied as well, for example, in order to imitate deeper-located joints or the like. Further, it is also known that such structure can be performed in correspondence with the printed motif, which in English is called "registered embossed". By such "correspondence", as is known, has to be understood that the structure is performed according to a motif which is adapted to the printed motif and that consequently the impressions cannot be provided randomly in respect to the printed motif.

The floor covering product can be provided with a translucent wear layer, for example, in the form of at least one film and/or in the form of at least one lacquer layer.

It is noted that the surface of the floor covering material, can also show other relief characteristics. So, for example, the surface, at the location of the depicted elements, may show relief parts which realize a more realistic impression of the imitated element. So, for example, in the case of elements imitating wood parts or wood panels, impressions can be provided which imitate wood pores, wood nerves or wood knots. Preferably, such impressions coincide with printed portions of the decor or follow such printed portions. So, for example, a plurality of oblong impressions with the form of wood pores can follow the course of a wood nerve depicted in the decor. Preferably, such impressions are obtained by means of a mechanical technique, although it is not excluded that they would also be achieved, completely or partially, by means of a chemical technique. Preferably, the depth of such impressions is smaller than that of the lowered edge regions at the circumference of the respective element.

The floor covering according to the first aspect of the invention comprises a top layer, which optionally further comprises a lacquer layer, provided as the uppermost layer of the floor covering product. Herein, this may relate, for example, to a UV- or an electron beam-hardening lacquer layer and/or to a PU lacquer layer. Such lacquer layer may act as a wear layer, however, may also be applied hereon as an additional layer onto the wear layer.

It is also noted that, when a transparent lacquer layer is provided, this latter can be provided before or after providing the impressions on the final surface.

It is clear that the floor covering material can comprise still further material layers, such as a carrier or liner and/or a superficial lacquer layer without departing from the scope of the invention. In case that a carrier or liner is applied, this preferably relates to a glass fiber layer and/or an additional textile layer and/or a scrim. The carrier or liner preferably is situated on that side of the foamed layer which is averted from the decor, or is situated internally in the foamed layer.

In a second aspect, the present invention pertains to a method of manufacturing a floor covering according to claim 10.

It is clear that the method of the second aspect preferably is applied for forming the floor covering material of the first aspect or the preferred embodiments thereof. Further, it is clear that within the scope of the second aspect the materials mentioned in the introduction and the further description can also be applied for the top layer, the base layer, preferably foamed base layer, and the textile backing.

Further, it should be noted by a skilled person that a base layer in the most preferred embodiment is a foamed base layer.

Preferably, a transparent wear layer is provided above, preferably directly above, the printed decor. However, in alternative embodiment, it is also possible that the floor covering material is free from a transparent wear layer and that, in other words, the surface of the floor covering material is formed by the printed decor. Preferably, in this case this this relates to a digitally printed decor, which is formed directly on the underlying layers of the floor covering material, preferably with the intermediary of one or more primers and/or basic layers, for example, based on PVC, such as based on PVC plastisol.

The possible superficial lacquer layer preferably is applied after the step of mechanical embossing. However, it is clear that it can also be applied prior to the mechanical embossing process without departing from the scope of the present invention.

The mechanical impressing preferably is performed after the possible wear layer has been partially or entirely provided. The wear layer preferably is supplied to the press element, preferably a pressing roller, in warm condition. The pressing roller preferably is cooled. The respective press element may also be provided in order to provide other mechanical impressions in the actual surface of the represented elements, such as, for example, impressions in order to imitate wood pores and the like. It is also possible that for these other mechanical impressions a separate press element is provided, preferably also a pressing roller.

Preferably, the floor covering material has a width between 2 and 6 meters and a length of several dozens of meters. Possibly, the mechanical impressions, as aforementioned, can be performed by means of one or more press elements, which can be controlled in the width direction of the floor covering material, such that their position can be altered, for example, on the basis of camera monitoring of the printed decor.

According to the second aspect, the printed decor can be applied by means of a printed foil, for example, a PVC foil, or by printing the decor on the foamed layer, preferably with the intermediary of one or more primers or basic layers, preferably on the basis of PVC plastisol. The printed decor preferably is protected by means of a transparent wear layer. According to a particular embodiment of the first aspect, the floor covering is free from a transparent wear layer and, in other words, the surface of the floor covering is formed by the printed decor. Preferably, in this case this relates to a digitally printed decor which is formed directly on the underlying layers of the floor covering material, preferably with the intermediary of one or more primers and/or basic layers, for example, based on PVC, such as based on PVC plastisol. Sufficient wear resistance can be obtained in that the inks as such show a certain wear resistance, for example, because they are hardened with UV, or because they comprise PVC and/or hard particles, such as aluminum oxide, and/or in that the printed decor continues over a certain distance in depth in the underlying primers and/or basic layers, for example, over a distance of more than 0.1 millimeter.

An alternative embodiment according to the second aspect of the present invention may refer to a floor covering which has relief obtained by a chemical technique, namely relief characteristics obtained by influencing the degree of foaming of the layer to be foamed, as well as relief characteristics obtained by a mechanical technique, namely by locally impressing the surface of the covering material. According to another example, the mechanical technique is at least applied for forming wood pores, wood nerves, matte or glossy zones and the like. Herein, this concerns the finer relief characteristics. The chemical technique preferably is at least applied for forming lowered edge regions and relief characteristics such as wood knots, cracks, gaps and the like. Herein, this relates to the coarser relief characteristics.

Preferably, the thickness of the possible wear layer at the location of the mechanical impressions is thinner than at the location of the chemically formed relief parts or structural elements.

In one embodiment, the step of providing backing textile under the base layer, comprises at least one of the following steps: guiding, centering, tensioning prior to bringing the backing textile under base layer.

In a preferred embodiment, said base layer is the foamed vinyl layer, and the step of providing a backing textile comprises following steps: guiding, centering, tensioning of the textile backing.

In a preferred embodiment according to the second aspect of the invention, step of gluing the textile backing to the base layer is performed using a glue composition. In a preferred embodiment, said glue composition is suitable for gluing PVC based non-woven textile. In an alternative embodiment, said glue composition is suitable for gluing a PVC and polyolefin based textile.

**In** a preferred embodiment, according to the second aspect of the invention, said application of a gluing compound is done discontinuously. **In** an alternative embodiment, the gluing compound is applied continuously.

**In** a preferred embodiment according to the second aspect of the invention said glue composition is applied via spray nozzles or a roller coater.

**In** another embodiment, said gluing step is performed by lamination, heating, welding, or other glue free technique.

Alternatively, according to a second aspect, the invention also relates to a method for manufacturing a floor covering product, wherein this method comprises forming of a single- or multi-layered substrate or a base layer by consolidating synthetic material-based starting material, as well as comprises at least one additional step after said foaming or lamination, which preferably is performed in line with said foaming and/or lamination, wherein at least one continuous decor film is laminated on the substrate base layer as a top layer and a textile backing is provided beneath, preferably directly beneath said substrate or base layer. The method may further comprises an optional step of applying the wear and/or lacquer layer within the top layer, wherein optionally impressions are formed in the surface. **In** one embodiment, said impressions are provided by means of a roller, which is provided with a relief on its surface.

In an alternative embodiment, the forming of the substrate base layer is performed by means of a strewing process, wherein the synthetic material-based starting material is strewn as a granulate and subsequently is consolidated in a press device.

According to this alternative embodiment of the second aspect, the foaming of the substrate and/or laminating step are of less importance and may take place in any manner known by a skilled person.

In the first as well as in the second aspect, of course the films to be laminated are thin films and preferably have a thickness of less than 1 mm, and still better less than 0.5 mm and even better less than 0.2 mm.

Preferably, the step of forming the substrate shows one or more of the following characteristics:
- that in the starting material one or more other materials than synthetic material are incorporated, such as additives and/or fillers, amongst which chalk;
- optionally that one or more reinforcement materials, more particularly fibers, are incorporated into the substrate, preferably in the form of one or more local layers in the form of a fiber mat, non-woven or fabric, for example, in the form of glass fiber, such as a glass fiber fleece, cloth or net.

According to a third aspect, the disclosure pertains to a method for recycling a floor covering according to the first aspect of the invention or obtainable by the method according to the second aspect of the invention, the method comprising:
i) subjecting the floor covering to heat;
ii) softening at least a textile backing;
iii) and collecting at least the textile backing.

In a preferred embodiment, the method according to the third aspect is a method for recycling a PVC based cushion vinyl floor covering according to the first aspect of the invention.

In a further preferred embodiment, step i) comprises subjecting the floor covering to a temperature of about 90 °C. That temperature allows softening of the backing textile which than can be optionally cut into pieces and removed using a suitable mechanical remover.

In a preferred embodiment according to the third aspect, the floor covering is subjected to a temperature of about 90 °C, preferably at least 90 °C, more preferably at least 105 °C, most preferably at least 120 °C. At said temperature the textile backing softens, and it can be cut into pieces using a suitable mechanical device. The pieces can then be removed using a suitable scraper, collector and the like.

In an alternative embodiment, when subjecting the floor covering to the temperature of about 90 °C, preferably of at least 90 °C, more preferably at least 105 °C, most preferably at least 120 °C, both textile backing and the base layer soften, and the whole floor covering can be collected using the suitable mechanical device. This was found to be particularly advantageous as it allows the recycling and reusing of the collected layers, with minimal backing of the residual material onto the processing equipment. The process of removal and re-processing of the floor covering can be optimized to be performed at a temperature of about 90 °C.

In a preferred embodiment, recycling of the floor covering according to the third aspect relates to the recycling of a cushion vinyl floor covering. In a more preferred embodiment, the recycling method relates to recycling of the base layer and the textile backing which are predominantly made of the PVC. In the preferred embodiment, said base layer and the backing textile are softened by application of the heat, preferably by subjecting of said cushion vinyl to a temperature of about 90 °C, more preferably to a temperature of at least 90 °C. Said softened layers can be easily collected and subjected to the recycling using the processes of such as mechanical or feedstock recycling.

With the intention of better showing the characteristics of the invention, herein below, as examples without any limitative character, some preferred embodiments are described, with reference to the accompanying drawings, wherein:
Figure 1 in top view represents a floor covering material with the characteristics of the invention;
Figure 2 represents a variant of a cross-section represented in figure 1;
Figure 3 represent another variant of a cross-section represented in figure 1; and
Figures 4 represents a schematic view of the method for manufacturing a floor covering.

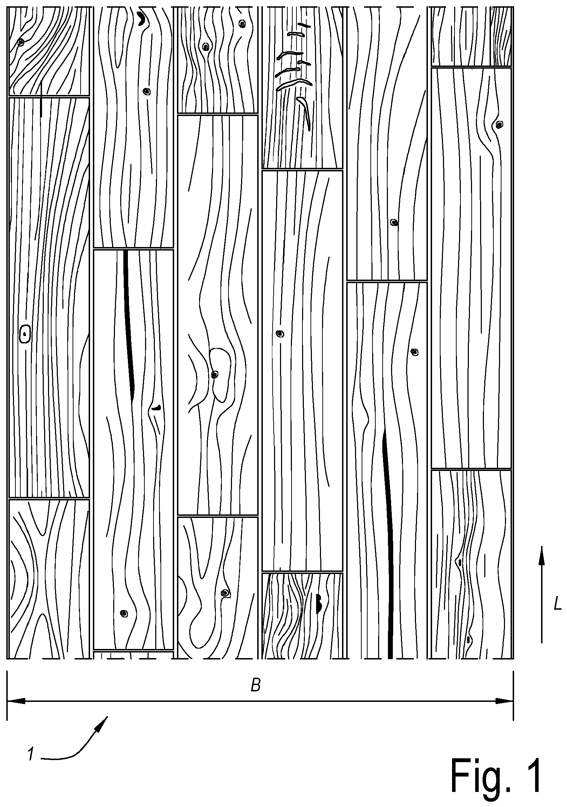

Figure 1 represents a portion of a floor covering material 1. In this case, this relates to a web-shaped floor covering material 1. The width B of such floor covering material 1 can vary between 2 and 6 meters and preferably is from 2.5 to 4.0 meters. The length L can be various dozens of meters, for example, between 20 and 50 meters. In the preferred example, this relates to a floor covering material which is supplied from a roll.

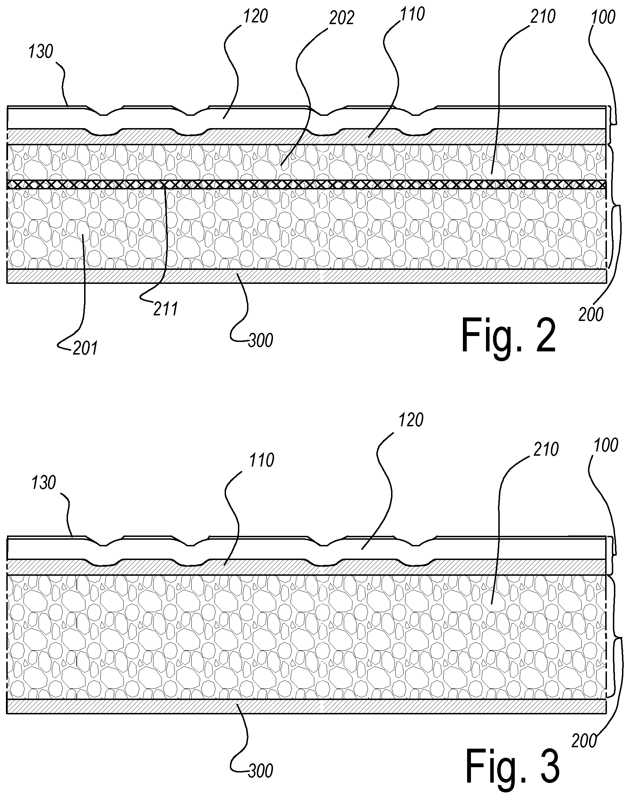

Figure 2 and figure 3 show that this floor covering material comprises at least a top layer 100, a base layer 200 and a textile backing 300 provided beneath, and preferably directly beneath said base layer 200. In the preferred embodiment, which is in accordance with the claimed invention, said base layer 200 is a foamed PVC layer, or so-called "cushion vinyl". The top layer comprises at least a decor print layer 110, a wear layer 120 above and preferably directly above said decor print layer 110 and optionally a lacquer layer 130 above, and preferably directly above said wear layer 120. In this case, a transparent wear layer 120 is provided above the printed decor 110. The wear layer 120 preferably has a thickness of 0.10 to 0.75 millimeters, and still better between 0.12 and 0.70 millimeters. The overall thickness of the floor covering material can be between 0.9 and 5 millimeters, preferably from 2 through 3.5 millimeters. The backing textile 300 is a non-woven felt, preferably a PVC needle felt non-woven. The thickness of the backing textile 300 is from at least 0.3 to at most 3 millimeters, preferably from at least 0.5 to at most 1.1 millimeters. In the exemplified embodiment shown in Fig. 2 and Fig. 3, the backing textile is provided directly beneath the foamed base layer.

In the preferred embodiment, the decor print 110 represents a plurality of panel-shaped elements, as shown in the Figure 1. In this case panel-shaped elements form an imitation of parquet panels. The elements are rectangular and are represented in a random pattern in adjacent rows.

Figure 2 shows a variant of the floor covering according to the first aspect of the invention featuring a carrier 211 in the base layer 200. In particular, the floor covering comprises two separately formed foamed layers, namely a first foamed layer 201 provided on a carrier 211, which is preferably a glass fiber carrier, and a second foamed layer 202 which is situated there above. The decor print layer 110 is situated directly onto the second foamed layer 202.

Figure 3 shows a variant of the floor covering according to the first aspect of the invention wherein the base layer 200 is without a carrier.

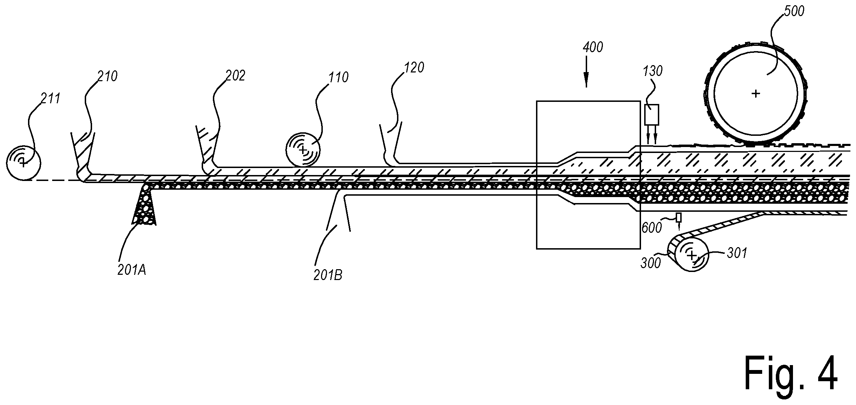

Figure 4 shows a possible embodiment of the method of the invention as well as schematically represents the installation applied therewith. In Fig. 4 an installation comprises a device for setting a carrier 211 in a portion 210 of a base layer 200. In Fig. 4 said base layer 200 is a synthetic start material, preferably a foamed PVC. The top layer 100 comprises at least a décor print layer 110 preferably directly printed by a printing means onto the base later, and a wear layer 120. Said top layer 100 is pressed in contact with the base layer 200. The base layer is preferably formed by the means of foaming 400 the base material.

In a preferred embodiment depicted in Fig. 4 an additional lacquer layer 130 may be applied over, and preferably directly above the wear layer 120. In a preferred embodiment according to the first aspect of the invention, this application is done prior to embossing on an embossing device 500, but can be done also, for example, prior to pressing or after the embossing step without the departure from the present invention.

In a preferred embodiment as shown in Fig. 4, embossing of the top and base layer is done by means of a roller 500, but it should be understood that any suitable embossing device may be used without departing from the scope of the invention.

The textile backing 300 is provided preferably by unwinding from an unwinding station 301, and said textile backing 300 and the base layer 200 are glued, preferably by using of a gluing compound 600. After the gluing of the textile backing 300 to the base layer 200, the floor covering is subjected to a pressing of the optional lacquer layer 130, the wear layer 120, the décor print layer 110, the base layer 200 and the backing textile 300 together by means of at least one pressing roll.

The present invention is in no way limited to the herein above-described embodiments, on the contrary may such floor covering be realized according to various variants without exceeding the scope of the present invention, as defined by the appended claims.

## Claims

1. Floor covering comprising at least a top layer (100), a base layer (200) and a backing textile (300) provided beneath, and preferably directly beneath, the base layer (200), wherein said top layer (100) comprises a PVC film, said backing textile (300) comprises at least 80 wt.% of polyvinyl chloride, and wherein said base layer (200) comprises at least a vinyl foamed layer.

2. Floor covering according to claim 1, wherein said base layer (200) comprises glass fiber and wherein said glass fiber has a content of at most 3.0 wt.% calculated on a basis of said base layer (200).

3. Floor covering according to any of the previous claims, wherein said backing textile (300) is a non-woven textile.

4. Floor covering according to any of the previous claims wherein said backing textile is a needle felt type.

5. Floor covering according to any of the previous claims wherein said backing textile (300) is of a thickness of at least 0.3 mm and at most 3.0 mm.

6. Floor covering according to any of the preceding claims wherein said backing textile (300) is of a grammage of 50 to 200 g/m³, preferably of 80 to 120 g/m³.

7. Floor covering according to any of the previous claims, wherein a thickness of said floor covering is at least 0.9 mm and at most 5 mm.

8. Floor covering according to any of the previous claims, wherein said floor covering is a cushion vinyl.

9. Floor covering according to any of the previous claims, wherein said top layer (100) comprises at least a décor print layer (110), a wear layer (120) above and preferably directly above said décor print layer (110) and optionally a lacquer layer (130) above and preferably directly above said wear layer.

10. Method of manufacturing a floor covering, wherein said floor covering comprises at least a top layer (100), a base layer (200) and a backing textile (300) provided beneath, and preferably directly beneath, the base layer (200), wherein said top layer (100) comprises a PVC film, said backing textile comprises at least 80 wt.% of polyvinyl chloride, and wherein said base layer (200) comprises at least a vinyl foamed layer, said method comprising the steps of:
i) providing a base layer (200) to be foamed;
ii) providing a décor print layer (110) on the base layer (200) to be foamed or already foamed;
iii) applying of the wear layer (120) above the said décor print layer (110);
iv) optional applying of a lacquer layer (130);
v) optional embossing of the lacquer layer (130) together with the wear layer (120) or the wear layer (120);
vi) providing a backing textile (300), preferably by unwinding from an unwinding station;
vii) bringing the backing textile (300) under the base layer (200), preferably directly under the base layer (200);
viii) gluing of the backing textile (300) and the base layer (200);
ix) pressing of the optional lacquer layer (130), the wear layer (120), the décor print layer (110), the base layer (200) and the backing textile (300) together.

## Patentansprüche

1. Bodenbelag, der mindestens eine Deckschicht (100), eine Grundschicht (200) und ein Unterlagstextilgewebe (300) umfasst, das unterhalb und vorzugsweise direkt unterhalb der Grundschicht (200) bereitgestellt ist; wobei die Deckschicht (100) eine PVC-basierte Folie umfasst; wobei das Unterlagstextilgewebe (300) mindestens 80 Gew.-% Polyvinylchlorid umfasst; und wobei die Grundschicht (200) mindestens eine Vinyl-basierte Schicht umfasst, die geschäumt wurde.

2. Bodenbelag nach Anspruch 1, wobei die Grundschicht (200) Glasfasern umfasst, und wobei die Glasfasern einen Anteil von maximal 3,0 Gew.-%, berechnet auf der Grundlage der Grundschicht (200), darstellen.

3. Bodenbelag nach einem der vorstehenden Ansprüche, wobei das Unterlagstextilgewebe (300) ein Vliesstoff ist.

4. Bodenbelag nach einem der vorstehenden Ansprüche, wobei das Unterlagstextilgewebe in Form von Nadelfilz ausgeführt ist.

5. Bodenbelag nach einem der vorhergehenden Ansprüche, wobei das Unterlagstextilgewebe (300) eine Dicke von mindestens 0,3 mm und höchstens 3,0 mm betragt.

6. Bodenbelag nach einem der vorstehenden Ansprüche, wobei das Unterlagstextilgewebe (300) ein Flächengewicht von 50 bis 200 g/m3, vorzugsweise von 80 bis 120 g/m3, aufweist.

7. Bodenbelag nach einem der vorstehenden Ansprüche, wobei die Dicke des Bodenbelags mindestens 0,9 mm und höchstens 5 mm beträgt.

8. Bodenbelag nach einem der vorstehenden Ansprüche, wobei der oben genannte Bodenbelag ein Cushion Vinyl-Belag ist.

9. Bodenbelag nach einem der vorstehenden Ansprüche, wobei die oben genannte Deckschicht (100) mindestens eine bedruckte Dekorschicht (110), eine Nutzschicht (120) über und vorzugsweise direkt über der oben genannten bedruckten Dekorschicht (110) und gegebenenfalls eine Lackschicht (130) über und vorzugsweise direkt über der Nutzschicht umfasst.

10. Verfahren zur Herstellung eines Bodenbelags, wobei der Bodenbelag mindestens Folgendes umfasst: eine Deckschicht (100), eine Grundschicht (200) und ein Unterlagstextilgewebe (300), das unterhalb und vorzugsweise direkt unterhalb der Grundschicht (200) bereitgestellt ist; wobei die Deckschicht (100) eine PVC-basierte Folie umfasst; wobei das Unterlagstextilgewebe (300) mindestens 80 Gew.-% Polyvinylchlorid umfasst; und wobei die Grundschicht (200) mindestens eine Vinyl-basierte Schicht umfasst, die geschäumt wurde; wobei das betreffende Verfahren die folgenden Schritte umfasst:
i) das Bereitstellen einer Grundschicht (200), die geschäumt werden soll;
ii) das Bereitstellen einer bedruckten Dekorschicht (110) auf der Grundschicht (200), die geschäumt werden soll oder die bereits geschäumt wurde;
iii) das Anbringen der Nutzschicht (120) auf die bedruckte Dekorschicht (110);
iv) optional das Anbringen einer Lackschicht (130);
v) optional das Prägen der Lackschicht (130) zusammen mit der Nutzschicht (120) oder der Nutzschicht (120);
vi) das Bereitstellen eines Unterlagstextilgewebes (300), vorzugsweise durch Abwickeln von einer Abwickelstation;
vii) das Anbringen eines Unterlagstextilgewebes (300) unter die Grundschicht (200), vorzugsweise direkt unter die Grundschicht (200);
viii) das Verkleben des Unterlagstextilgewebes (300) mit der Grundschicht (200);
ix) das Miteinanderverpressen der optionalen Lackschicht (130), der Nutzschicht (120), der bedruckte Dekorschicht (110) und des Unterlagstextilgewebes (300).

## Revendications

1. Revêtement de sol qui comprend au moins une couche supérieure (100), une couche de base (200) et un textile faisant office de dessous (300) qui est procuré en dessous, et de préférence directement en dessous de la couche de base (200) ; dans lequel ladite couche supérieure (100) comprend un film à base de PVC ; dans lequel ledit textile faisant office de dessous (300) comprend au moins 80 % en poids de chlorure de polyvinyle ; et dans lequel ladite couche de base (200) comprend au moins une couche à base de vinyle qui a été transformée en mousse.

2. Revêtement de sol selon la revendication 1, dans lequel ladite couche de base (200) comprend des fibres de verre, et dans lequel lesdites fibres de verre représentent une teneur qui s'élève au maximum à 3,0 % en poids, calculée sur une base de ladite couche de base (200).

3. Revêtement de sol selon l'une quelconque des revendications précédentes, dans lequel ledit textile faisant office de dessous (300) est un textile non tissé.

4. Revêtement de sol selon l'une quelconque des revendications précédentes, dans lequel ledit textile faisant office de dessous est du type feutre aiguilleté.

5. Revêtement de sol selon l'une quelconque des revendications précédentes, dans lequel ledit textile faisant office de dessous (300) possède une épaisseur qui s'élève au minimum à 0,3 mm et au maximum à 3,0 mm.

6. Revêtement de sol selon l'une quelconque des revendications précédentes, dans lequel ledit textile faisant office de dessous (300) possède un grammage de 50 à 200 g/m³, de préférence de 80 à 120 g/m³.

7. Revêtement de sol selon l'une quelconque des revendications précédentes, dans lequel une épaisseur dudit revêtement de sol s'élève au minimum à 0,9 mm et au maximum à 5 mm.

8. Revêtement de sol selon l'une quelconque des revendications précédentes, dans lequel ledit revêtement de sol est un revêtement de sol en vinyle souple.

9. Revêtement de sol selon l'une quelconque des revendications précédentes, dans lequel ladite couche supérieure (100) comprend au moins une couche de décor imprimée (110), une couche d'usure (120) au-dessus, et de préférence directement au-dessus de ladite couche de décor imprimée (110) et, le cas échéant, une couche de laque (130) au-dessus, et de préférence directement au-dessus de ladite couche d'usure.

10. Procédé de fabrication d'un revêtement de sol, dans lequel ledit revêtement de sol comprend au moins une couche supérieure (100), une couche de base (200) et un textile faisant office de dessous (300) qui est procuré en dessous, et de préférence directement en dessous de la couche de base (200) ; dans lequel ladite couche supérieure (100) comprend un film à base de PVC ; dans lequel ledit textile faisant office de dessous (300) comprend au moins 80 % en poids de chlorure de polyvinyle ; et dans lequel ladite couche de base (200) comprend au moins une couche à base de vinyle qui a été transformée en mousse, dans lequel le procédé en question comprend les étapes au cours desquelles :
i) on procure une couche de base (200) qui doit être transformée en mousse;
ii) on procure une couche de décor imprimée (110) sur la couche de base (200) qui doit être transformée en mousse ou qui a déjà été transformée en mousse ;
iii) on applique la couche d'usure (120) au-dessus de ladite couche de décor imprimée (110) ;
iv) le cas échéant, on applique une couche de laque (130) ;
v) le cas échéant, on imprime en relief la couche de laque (130) de manière conjointe avec la couche d'usure (120) ou la couche d'usure (120) ;
vi) on procure un textile faisant office de dessous (300), de préférence par l'intermédiaire d'un déroulement à partir d'un poste de déroulement ;
vii) on amène le textile faisant office de dessous (300) en dessous de la couche de base (200), de préférence directement en dessous de la couche de base (200) ;
viii) on colle le textile faisant office de dessous (300) et la couche de base (200) ;
ix) on presse ensemble la couche de laque facultative (130), la couche d'usure (120), la couche de décor imprimée (110), la couche de base (200) et le textile faisant office de dessous (300).
